Europäisches Patentamt

European Patent Office

Office européen des brevets

(11) Publication number: **0 632 660 A1**

# EUROPEAN PATENT APPLICATION

(21) Application number: **93305157.5**

(22) Date of filing: **01.07.93**

(51) Int. Cl.6: **H04N 7/18, G08B 13/196**

(43) Date of publication of application:
**04.01.95 Bulletin 95/01**

(84) Designated Contracting States:
**CH DE ES FR GB IT LI SE**

(71) Applicant: **YU'S ELECTRIC Co. Ltd**
**12F., No. 150,**
**Chin Lin Rd.**
**Taipei (TW)**

(72) Inventor: **Tzong-Shi Lin**
**4F., No. 20-1,**
**Lane 313, Sec. 1**
**Hsi An St.,**
**Taipei (TW)**

(74) Representative: **Hallam, Arnold Vincent et al**
**E.N. LEWIS & TAYLOR**
**144 New Walk**
**Leicester LE1 7JA (GB)**

(54) **Monitor system with automatic recording control.**

(57) A monitor system with automatic recording control including a plurality of monitoring units (1) respectively installed in different monitoring spots, and a central processing unit (2) for controlling a video tape recorder to record images taken by either monitoring units, each monitoring unit including a detection trigger (11) connected to the signal input port of the microprocessor unit through a starting switch (13), the starting switching being connected to the reset contact legs of the microprocessor unit through an auto reset switch (5), and a video camera (12) being connected to the output port of the microprocessor unit through an electronic switch (14), the microprocessor unit having a first set of output control legs connected to a remote control circuit thereof, and a second set of output control legs for communication with the remote controller of a video tape recorder or for connecting to the control switch of the video tape recorder.

FIG.1

## BACKGROUND OF THE INVENTION

The present invention relates to an automatic recording control and more particularly to a monitor system with automatic recording control for controlling a video tape recorder to record images taken by either monitoring unit installed in any of various monitoring spots.

A variety of monitor systems are known, and widely used for monitoring elevators, exhibition centres, show rooms, storage places, etc. These monitor systems generally comprise a monitor and a video tape recorder. When a monitor system is turned on, the monitor and the video tape recorder keep operating 24 hours a day. Therefore, video tapes must be continuously supplied by operators. Because the monitor and the video tape recorder are continuously operated, their service life will be greatly shortened. Further, when several locations are to be monitored, the installation cost of the monitor system is very expensive because a video camera and a video tape recorder must be simultaneously installed at each monitoring location.

## SUMMARY OF THE INVENTION

The present invention provides a monitor system with automatic recording control which comprises a plurality of monitoring units respectively installed in different spots to be monitored, and a microprocessor unit for controlling a video tape recorder to record images taken by either monitoring units. Each monitoring unit comprises a detection trigger connected to the signal input legs of the microprocessor unit through a starting switch, and a video camera connected to the output legs of the microprocessor unit through an electronic switch. The starting switch is connected to the reset legs of the microprocessor unit through an auto reset switch and a manual reset switch respectively. The recording control output legs of the microprocessor unit may be directly connected to a video tape recorder or indirectly connected to the video tape recorder via a remote controller. When an intruder enters the detecting range of either monitoring unit or a respective push-button switch is pressed, the respective monitoring unit is triggered to start the video camera. At the same time, a signal is sent by the alerted monitoring unit to the microprocessor unit causing it to turn on the video tape recorder for recording the images taken by the video camera of the alerted monitoring unit. Therefore, the monitoring units and the video tape recorder do not work when no event is happened. An alarm system may be connected to the monitor system recording control. When either monitoring unit is alerted, a triggered signal is sent to the alarm system, causing it to alarm.

## BRIEF DESCRIPTION OF THE DRAWINGS

Figure 1    is a circuit block diagram of the present invention;

Figure 2    is a circuit diagram of the present invention; and

Figure 3    is a operation flow chart of the microprocessor unit of the present invention.

## DETAILED DESCRIPTION OF THE PREFERRED EMBODIMENT

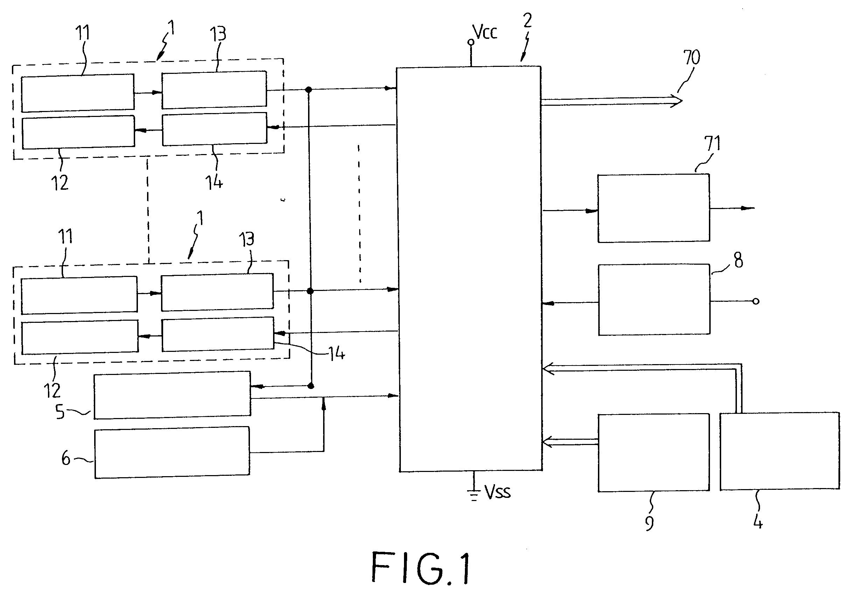

Referring to Figure 1, a monitor system with automatic recording control in accordance with the present invention is generally comprised of one or more monitoring units 1, and a microprocessor unit 2. The microprocessor unit 2 has a software control program for controlling the operation of the automatic recording control. Each monitoring unit 1 comprises a detection trigger 11, a video camera 12, a starting switch 13, and an electronic switch 14. The detection trigger 11, which can be an infrared detector, push-button switch, door bell, electronic starter, human body sensor, etc., is connected to the signal input port of the microprocessor unit 2 through the starting switch 13. The starting switch 13 is connected to the reset contact legs of the microprocessor unit 2 through an auto reset switch 5. The microprocessor unit 2 is also provided with a manual reset switch 6 connected to its reset contact legs. The video camera 12 is connected to the output port of the microprocessor unit 2 through the electronic switch 14.

The microprocessor unit 2 also has a set of output control legs connected to a built-in infrared remote control circuit 71, and a set of video tape recorder control output legs 70 connected either to a remote controller of a video tape recorder or directly connected to a control switch of the video tape recorder. The video tape recorder is started or switched off through control of the infrared remote control circuit 71 or by way of the set of video tape recorder control output legs 70. The video tape recorder can also be controlled by the remote controller.

The video tape recorder itself is also connected to an input port of the microprocessor unit 2 through a video tape recorder power detecting circuit 8 which monitors whether or not power is supplied to the recorder. A remote control frequency selector circuit 9 and one or more timer circuits 4 are connected to an input port of the microprocessor unit 2. The number of timer circuits 4 accords with the number of monitoring units 1. The remote control frequency selector circuit 9 is for changing the output frequency of the infrared remote control circuit 71.

The number of monitoring units 1 used is determined according to the number of locations to be monitored. When an event occurs at a monitoring location, the respective monitoring unit immediately starts the respective video tape recorder, and simultaneously triggers the microprocessor unit 2 to drive the video tape recorder to record the images.

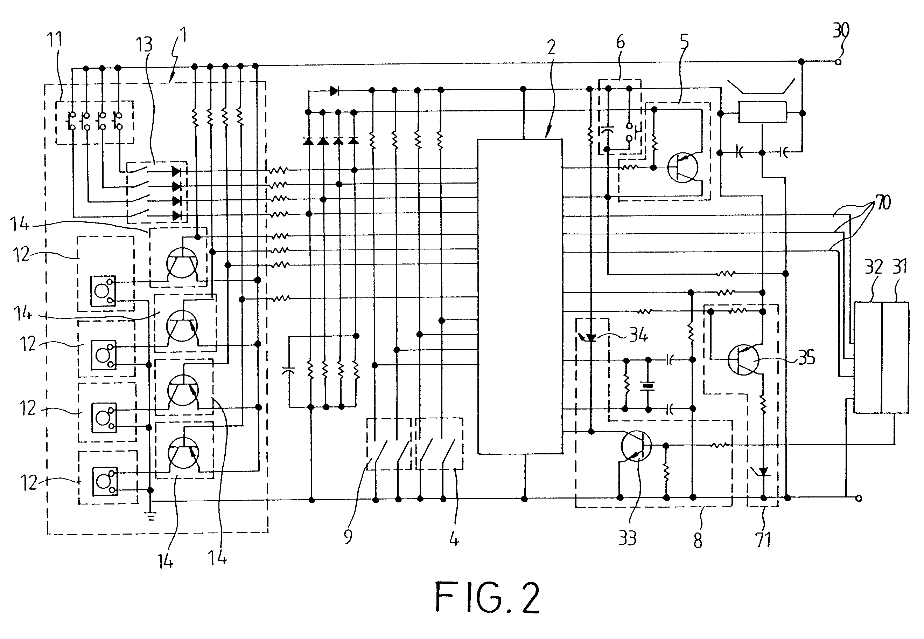

Referring to Figure 2, the detection trigger 11 is armed as the starting switch 13 is switched on after the application of the power supply. If a trigger signal is generated by the trigger 11, the auto reset switch 5 of the microprocessor unit 2 is instantaneously connected to give a signal to the microprocessor unit 2, causing the microprocessor unit 2 to clear last received signals and enter the state of receiving new signals. If the auto reset switch 5 does not work after the detection trigger has been alerted, the microprocessor unit 2 can be reset manually by pressing the manual reset switch 6. Then, the output frequency of the infrared remote control circuit 71 is selected for controlling the operation of the video tape recorder 31. Through the control of the timer circuit 4, the video tape recorder 31 is controlled by the microprocessor unit 2 to record the images taken by the video camera 12 at every event location according to the selected length of time set by the assoiated timer circuit.

Because the detection trigger 11 of the monitoring unit 1 at a monitoring location is connected with a respective starting switch 13, switching on any starting switch 13 causes the respective monitoring unit 1 to become alerted. If there is an event occurred at one monitoring location, the detection trigger 11 of the respective monitoring unit 1 immediately gives a trigger signal to the microprocessor unit 2, causing the microprocessor unit 2 to turn on the electronic switch 14 of the alerted monitoring unit 1, and therefore the respective video camera 12 is activated to take images. At the same time, the video tape recorder 31 is started to record the images taken by the video camera 12 of the alerted monitoring unit 1 at a predetermined length of time, by means of the control of the set of video tape recorder output legs 70 of the microprocessor unit 2 directly or through the control of the corresponding remote controller 32 (the function key of the remote controller may be triggered to start the video tape recorder by the microprocessor unit 2 via a mechanical device). The microprocessor unit 2 may be controlled to transmit a control frequency through the infrared remote control circuit 71 for controlling the remote controller 32 to start the video tape recorder 31.

The output terminal of the video tape recorder 31 is connected to the input port of the microprocessor unit 2 through the video tape recorder power detecting circuit 8. As the video tape recorder 31 is started, the output terminal of the video tape recorder 31 sends a voltage to the video tape recorder power detecting circuit 8, causing the transistor switch 33 of the video tape recorder power detecting circuit 8 to obtain a $V_{BE}$ voltage from between the base and emitter thereof, therefore the passage between the collector and emitter of the transistor switch 33 is electrically connected to turn on a LED (light emitting diode) 34. LED 34 is off if the video tape recorder 31 is not started.

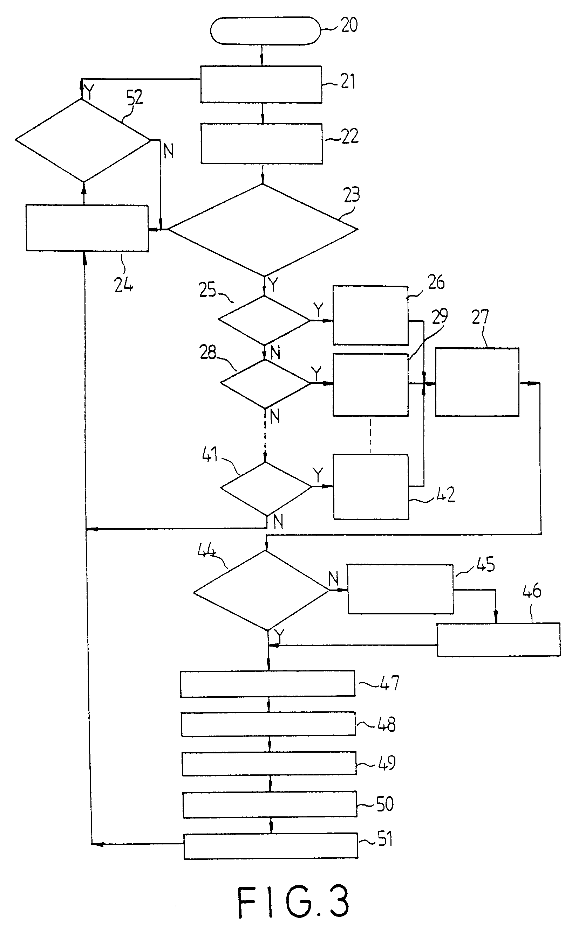

Referring to Figure 3 and Figure 1 again, after "power on" 20, the auto reset switch 5 of the microprocessor unit 2 is instantaneously connected, causing the microprocessor unit 2 to execute "auto reset" 21 and then to enter the step of "default setting" 22. After "default setting" 22, the microprocessor unit 2 proceeds to the step of "receiving the input of triggered signal Sn?" 23, and then to the next step if there is a triggered signal Sn received. If there is no triggered signal Sn, the microprocessor unit 2 enters the mode of "waiting for signal input" 24 then continuously judges the process of "receiving the input of triggered signal Sn "52" and then returns to "auto reset" 21. When a triggered signal is received and identified and "auto reset" 21 and "default setting" 22 have been done, the microprocessor unit 2 immediately enters the step of "S1 = Sn" 25 to judge if the first inputted triggered signal S1 equals to the default value Sn. If S1 is not equal to Sn, then the microprocessor unit 2 enters the step of "S2 = Sn" 28 to judge if the second inputted triggered signal equals to the default value Sn. The judging procedure is continued until "Sn = Sn?" 41 to check if the "n" time triggered signal equals to the default value Sn. If the "n" time triggered signal is not equal to the default value, the microprocessor unit 2 immediately returns to the step of "waiting for signal input" 24. If the first inputted triggered signal S1 equals the default value Sn, the microprocessor unit 2 immediately enters the step of "selecting setting time T1" 26 automatically to select a setting time, and then proceeds to the step of "generating a video camera start signal C" 27 to start the respective video camera. After a video camera start signal has been produced to start the respective video camera, the microprocessor unit 2 immediately enters the step of "detecting if the video tape recorder turned on?" 44. If the video tape recorder is on, the procedure of "start recording" 47 is executed. If the video tape recorder is off, the procedure of "switching on the video tape recorder" 45 is executed to turn on the video tape recorder for recording the images after a "duration of time t1" 46 which allows the magnetic head to touch the video tape. After the procedure of "start recording" 47, the video tape recorder is controlled to record images according to the selected "duration of time tn" 48. As the selected "duration of time tn" 48 is up, the procedure of "stop recording" 49 is executed. After the "duration of time t3" 50 for allowing the magnetic head to lift from the video tape, the procedure of "switching off the video tape recorder" 51 is executed, and then the microprocessor unit 2 returns to the step of "waiting for signal input" 24 and to continue the operation.

**Claims**

1. A monitor system with automatic recording control comprising at least one monitoring unit, and a microprocessor unit, said microprocessor unit being stored with a software control program for operation control, each monitoring unit comprising a detection trigger, a video camera, a starting switch, and an electronic switch, said detection trigger being connected to the signal input port of said microprocessor unit through the starting switch of the same monitoring unit, said starting switch being connected to reset contact legs of said microprocessor unit through an auto reset switch, said video camera being connected to an output port of said microprocessor unit through the electronic switch of the same monitoring unit, said microprocessor unit comprising a first set of output control legs connected to a remote control circuit thereof, and a second set of output control legs for communication with the remote controller of a video tape recorder or for connecting to the control switch of said video tape recorder, said video tape recorder being connectible to an input port of said microprocessor unit through a video tape recorder power detecting circuit.

2. The monitor system with automatic recording control according to claim 1 wherein the detection trigger of either monitoring unit can be an infrared detector, push-button switch, door bell, electronic starter, human body sensor, etc.

3. The monitor system with automatic recording control according to claim 1 wherein the number of said at least one monitoring units is determined according to the number of spots to be monitored.

4. The monitor system with automatic recording control according to claim 1 or claim 3 wherein said microprocessor unit comprises at least one timer circuit for setting the duration of recording time, the number of said at least one timer circuit being equal to the number of said at least one monitoring unit.

5. The monitor system with automatic recording control according to claim 1 wherein said microprocessor unit comprises a remote control frequency selector for setting a desired remote control frequency.

FIG.1

FIG. 2

FIG.3

European Patent
Office

# EUROPEAN SEARCH REPORT

Application Number

EP 93 30 5157

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 028 933 (ASCOTTS LTD.)<br>* abstract; figure 1 *<br>* page 4, line 25 - page 5, line 18 *<br>--- | 1,2,3 | H04N7/18<br>G08B13/196 |
| Y | GB-A-2 253 534 (ADVANCED TECHNOLOGY INDUSTRIES LTD.)<br>* abstract; figures 1,5 *<br>* page 6, line 24 - line 25 *<br>* page 9, line 22 - line 25 *<br>--- | 1,2,3 | |
| A | US-A-4 777 526 (SAITOH ET AL.)<br>* column 6, line 40 - line 53; figure 1 *<br>--- | 1,4 | |
| A | EP-A-0 371 150 (OLIVER)<br>* abstract; figures 1A,1B *<br>* column 2, line 14 - line 26 *<br>* column 2, line 44 - line 55 *<br>* column 4, line 7 - line 10 *<br>--- | 1,5 | |
| A | US-A-4 511 886 (RODRIGUEZ)<br>* the whole document *<br><br>----- | | TECHNICAL FIELDS SEARCHED (Int. Cl.5)<br><br>G08B<br>H04N |

The present search report has been drawn up for all claims

| Place of search | Date of completion of the search | Examiner |
|---|---|---|
| BERLIN | 22 NOVEMBER 1993 | DANIELIDIS S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)